# EUROPEAN PATENT SPECIFICATION

(11) **EP 2 093 507 B1**
(45) Date of publication and mention of the grant of the patent: **29.11.2017**
(21) Application number: 09250469.5
(22) Date of filing: 23.02.2009
(51) Int. Cl.: F24F 7/00, F24F 11/00

(54) **Ventilation unit**
Beatmungseinheit
Unité de ventilation

(30) Priority: 22.02.2008 GB 0803269
(43) Date of publication of application: 26.08.2009
(73) Proprietor: NuAire Limited, Caerphilly CF83 1NA (GB)
(72) Inventor: Biggs, Colin, Caerphilly CF83 1NA (GB)
(74) Representative: Davies, Gregory Mark

(56) References cited:
- EP-A- 1 445 549
- WO-A-95/18944
- DE-A1- 4 343 611

## Description

This invention relates generally to a ventilation unit, and more particularly, to a ventilation unit incorporating a heat exchanger for heat recovery and having a supply fan and an extract fan for drawing air into and/or expelling air from the unit.

Buildings are becoming increasingly air tight as building efficiency continues to be improved to minimise the uncontrolled infiltration/exfiltration of air via the building envelope. As a result it has become increasingly important to ventilate buildings to remove CO₂, odours and other air contaminants, and ventilation systems for this purpose are therefore becoming widespread.

It is highly desirable to make such ventilation systems as energy efficient as possible. Accordingly, ventilation systems have been developed that include an element of heat recovery. One known ventilation unit comprises an outer housing having a fluid inlet flow path that flows in a counter-flow arrangement with a fluid outlet flow path and includes a heat exchanger and fans. A supply fan propels the supply air into the unit via a supply air inlet and the air is directed through the heat exchanger and out of the ventilation unit through the supply air outlet. Extract air passes through an extract air inlet and passes through the heat exchanger and is propelled out of the unit through the extract air outlet by the extract fan. As the supply air and extract air pass inside the heat exchanger, the extract air gives up its heat to the supply air in order to increase the temperature of the cool supply air before it is distributed around a dwelling or other building type.

Fan failure may lead to serious health problems and safety implications for a person as a result of the build up of air contaminants within the building. Additionally, fan failure could cause incorrect pressure distributions within the building, causing airflows of incorrect magnitude and directions.

Ventilation systems have been proposed whereby a standby fan is provided in respect of each of the supply and extract fans, with a control system that effects automatic changeover and maintenance of full duty in the event of main duty fan failure. Thus, such systems provide an extra standby fan per main duty fan, which may be arranged in series or parallel with the main duty fan.

Disadvantages with such systems are that the inclusion of one standby fan per main duty fan element increases the physical size of the ventilation unit and the additional components increase the overall cost of the unit. The width of the ventilation unit may be minimised by arranging the standby fans in series with the respective main duty fans, however this is at the expense of a reduction of energy efficiency, as extra energy is required to drag the air through the broken fan.

In International Patent Application Number WO 95/18944, a ventilation unit is provided with a single standby fan. Air is selectively diverted to the standby fan in the event of failure of the inlet or outlet fans via a series of valves and redundant air supply channels. While this arrangement provides benefits over the two standby fan arrangements, the redundant air channels and valve required add undesirable complexity and cost to the fan unit.

It is therefore an object of the present invention to provide an improved ventilation unit which alleviates the above-mentioned problems and still provides sufficient back-up in case of a supply or extract fan failure.

In accordance with the present invention, there is provided a ventilation unit as defined by the accompanying claims.

In an aspect of the invention a ventilation unit has a fluid supply inlet a fluid extract outlet; a supply fan for propelling fluid into said unit via said fluid supply inlet, an extract fan for propelling fluid out of said unit via said fluid supply outlet, a standby fan configured to operate as a supply fan and an extract fan upon receipt of a control signal, means for monitoring operation of said supply and extract fans, control means for generating a control signal in the event of failure of either said supply fan or said extract fan, said control signal being for causing said standby fan to operate as the failed fan; and f blocking members. The blocking members being configured to selectively partially block the supply air inlet or the extract air outlet in the event of failure such that air bypasses the failed fan and passes through the standby fan.

Preferably the blocking members comprise a supply blocking member and an extract blocking member. The supply air inlet is in a closed state when the supply blocking member covers the part of the supply air inlet that passes air to the supply fan and the supply air flow bypasses the supply fan. The extract air outlet is in a closed state when the extract blocking member covers the extract air outlet that expels air from the extract fan and the extract air flow bypasses the extract fan.

Preferably a ventilation unit, as described above, wherein a supply fan is positioned in the fluid inlet flow path, the extract fan is positioned in the fluid outlet flow path and a standby fan is positioned generally centrally between the fluid inlet and outlet flow paths.

In one exemplary embodiment, dampers are provided to define alternative fluid inlet and outlet flow paths through said unit upon activation, such that the fluid bypasses the failed fan and passes through a standby fan.

In an alternative embodiment the fluid inlet and/or outlet flow paths may be altered by external means to selectively partially block/leave open the fluid inlet/outlet, such that the fluid bypasses the failed fan and passes through a standby fan.

Beneficially, the fluid inlet and/or outlet flow paths by-pass the standby fan during normal operation.

In a preferred embodiment, the fluid inlet and/or outlet flow paths pass through a heat exchanger.

The invention extends to a ventilation system comprising at least one ventilation unit as defined above.

These and other aspects of the invention will be apparent from and elucidated with reference to, the embodiment described herein.

An embodiment of the present invention will now be described by way of example only and with reference to the accompanying drawings, in which:
Figure 1 is a schematic cross sectional plan view of a ventilation unit according to an exemplary embodiment of the present invention; and
Figure 2 is a schematic cross sectional plan view of the ventilation unit of Figure 1, illustrating operation of the standby fan in the event of supply fan failure.

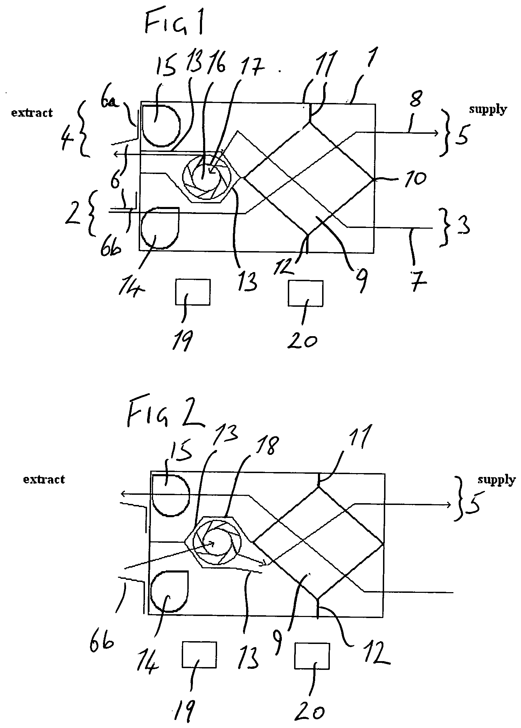

Referring to Figure 1 of the drawings, a ventilation unit according to an exemplary embodiment of the invention comprises a housing 1 of generally rectangular cross section having a supply air inlet 2 at a first end and an extract air inlet 3 substantially opposite the supply air inlet at a second end. Adjacent to the supply air inlet 2 on the first end is an extract air outlet 4 and adjacent to the extract air inlet 3 on the second end is a supply air outlet 5, whereby the extract air inlet is positioned substantially opposite to the supply air outlet.

The housing is typically formed of sheet metal, for example aluminium, and has external blocking members 6 configured to selectively partially block the supply air inlet 2 and the extract air outlet 4. The blocking members are formed of a rigid rectangular plate bent on an axis parallel to the shorter edges of the rectangular plate, into two flaps.

The blocking members are rotatably mounted to the outer edge of the first end of the housing such that part of the supply air inlet/extract air outlet may be left open and part of the supply air inlet/extract air outlet may be blocked. This may be achieved by fixing an annular collar to the apex of the blocking member and pinning the blocking member in place, alternatively the apex may be fixed to an axle that is secured at the top and bottom of the supply air inlet/extract air outlet.

The supply air flow path 7 is defined as the path taken by the supply air between the supply air inlet 2 and the supply air outlet 5, and the extract air flow path 8 is defined as the path taken by the extract air between the extract air inlet 3 and the extract air outlet 4. Both air flow paths pass through a heat exchanger 9 that is arranged inside the housing.

The air flow paths 7, 8 are separated by a dividing wall 10, which may be metal, positioned between the heat exchanger 9 and the second end of the housing. Further dividing walls (11, 12), are configured between the third side of the housing and the heat exchanger and the fourth side of the housing and the heat exchanger 9. Dampers 13 are used to define the air flow path between the heat exchanger and the first side of the housing, as will be discussed in more detail later.

A supply fan unit 14 is mounted within, and close to the first end of, the housing and is positioned in the supply air flow path 7. An extract fan unit 15 is mounted substantially parallel to the supply fan and is positioned close to the first end of the housing in the path of the extract air 8. A standby fan unit 16 is positioned at a distance from the first side of the housing that is greater than the substantially parallel fan arrangement. The standby fan unit 16 is located generally between the two air flow paths 7, 8 within the unit and has an air inlet 17 at its base. A standby flap 18 is configured to control the flow of air through the air inlet 17 of the standby fan unit 16 and therefore prevents the movement of the air into the fan while in a standby state.

Each fan unit comprises a single fan in a protective casing or shroud, although it will be appreciated that each of the fan units may comprise multiple fans in series or parallel. The supply fan and the extract fan are preferably a scroll type fan whereas the standby fan is preferably a balanced curve type fan by means of which air is dispersed radially.

When the supply inlet is in a closed state, one edge of a first flap of the supply blocking member lies parallel and flush to the outer edge of the first side of the housing and covers the part of the supply air inlet that passes air to the supply fan. The supply air inlet is unobstructed adjacent to the fan and as a result allows supply air to flow into the unit. In the supply inlet closed state described above, the supply air flow path bypasses the supply fan.

When the extract outlet is in a closed state one edge of a second flap of the extract blocking member lies parallel and flush to the first side of the housing and covers the extract air outlet that in normal operation would expel the air from the system after being passed through the extract fan. The extract air is free to pass through the part of the extract air outlet adjacent to the extract fan in order to allow extract air to flow out of the unit. In the extract outlet closed state described above, the extract air flow path bypasses the extract fan.

The blocking members 6 are operated by a control system 19 and could be held in position by a ratchet and spring. Alternatively, a magnetic method of actuating and locking the blocking member could be implemented.

Dampers 13 are configured around the standby fan 16, inside the housing, in order to ensure separation of the supply and extract air-flow paths in the space defined between the heat exchanger, the first side of the housing and the dividing walls 11,12 between the third and forth sides and the heat exchanger. A motor arrangement 20 controlled by the control system 19 is provided to configure the dampers 13 within the unit to allow the standby fan 16 to take over the duty of the failed fan (14 or 15). The dampers may be in the form of hinged metal plates as shown, but alternatives may be used, for example motorized grills. Any suitable motor arrangement may be used to reconfigure the dampers, for example linear rotary motors, or the damper operating mechanism may be fan pressure operated with gravity or spring closures.

In the case of extract fan 15 failure displayed in Figure 1 the extract air enters the housing through the extract air inlet and is directed through the heat exchanger 9, whereby the extract air flow path 7 passes near to, but does not mix with, the supply airflow path 8, transferring energy to the supply air in the process. The control system switches the extract blocking member 6a to the extract air outlet closed state and activates the standby fan 16 whereby the standby flap 18 is set to the open state, allowing for the flow of extract air through the air inlet 17 of the standby fan 13. The extract air is dispersed radially and is guided by the dampers 13 towards the extract air outlet 4 whereby it passes the unobstructed part and is expelled from the housing.

In the case of supply fan 14 failure displayed in Figure 2 the control system switches the supply blocking member 6b to the supply air inlet closed state, permitting the flow of air into the unit, such that it bypasses the failed supply fan 14. In addition to this, the control system activates the standby fan 16 and switches the standby flap 18 to the open state, allowing the flow of supply air through the air inlet 17 of the standby fan, whereby it is dispersed radially and guided by the dampers 13 towards the heat exchanger 9. As the supply air passes through the heat exchanger 9 it is heated-up and continues flowing via the supply air flow path until it passes through the supply outlet 5.

The control system 19 is arranged to monitor for malfunction of the duty extract of supply fan and if a malfunction is detected, to close the duty fan (14 or 15) down and to activate the standby fan 16 to act as the new duty fan.

Advantages include the fact that the air flow path is not channelled through the fan that is idle. Instead, as illustrated in Figure 1 and Figure 2, the air flow path bypasses the failed fan and the standby fan performs the function of the idle fan, changing the air flow path in order to achieve this result.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of hardware. The mere fact that certain measures are recited in mutually different dependent claims does not indicate that a combination of these measures cannot be used to advantage.

## Claims

1. A ventilation unit comprising:
a supply air inlet (2);
an extract air outlet (4);
a supply fan (14) for propelling fluid into said unit via said supply air inlet (2);
an extract fan (15) for propelling fluid out of said unit via said extract air outlet (4);
a standby fan (16) configured to operate as a supply fan or an extract fan upon receipt of a control signal; and
means for monitoring operation of said supply (14) and extract fans (15);
control means for generating a control signal in the event of failure of either said supply fan (14) or said extract fan (15), said control signal being for causing said standby fan (16) to operate as the failed fan;
**characterised in that** the ventilation unit further comprises blocking members (6) configured to selectively partially block the supply air inlet (2) or the extract air outlet (4) in the event of failure such that air bypasses the failed fan and passes through the standby fan (16).

2. A ventilation unit according to claim 1, wherein a supply air flow path (7) and an extract air flow path (8) are defined within the ventilation unit, and the supply fan is positioned in the supply air flow path (7), the extract fan (15) is positioned in the extract air flow path (8) and a standby fan (16) is positioned generally centrally between the supply air (7) and extract air (8) flow paths.

3. A ventilation unit according to claim 1 or 2, wherein movement of the blocking members (6) is controlled by the control means.

4. A ventilation unit according to any preceding claim wherein the blocking members (6) comprise a supply blocking member (6b) and an extract blocking member (6a), and the supply air inlet (2) is in a closed state when the supply blocking member (6b) covers the part of the supply air inlet (2) that passes air to the supply fan (14) and the supply air flow bypasses the supply fan (14), and the extract air outlet (4) is in a closed state when the extract blocking member (6a) covers the extract air outlet (4) that expels air from the extract fan (15) and the extract air flow bypasses the extract fan (15).

5. A ventilation unit according to any preceding claim wherein the blocking members (6) are rotatably mounted such that part of the supply air inlet (2) and the extract air outlet (4) may be left open and part of the supply air inlet (2) and the extract air outlet (4) may be blocked.

6. A ventilation unit according to claim 2, wherein the supply air inlet (7) and/or extract air outlet (8) flow paths by-pass the standby fan (16) during normal operation.

7. A ventilation unit according to claim 2 or 5, wherein said supply air inlet (7) and extract air outlet (8) flow paths pass through a heat exchanger (17).

8. A ventilation system comprising at least one ventilation unit according to any preceding claim.

9. A method of operating a ventilation system, wherein a ventilation supply fan (14) is provided for propelling air into a ventilation unit via a supply air inlet (2) and an extract fan (15) is provided for propelling air out of the ventilation unit via an extract air outlet (4), and a standby fan (16) which is capable of operating as a supply fan and an extract fan, operation of the supply (14) and extract fans (15) being monitored, and a control signal being generated in the event of failure of either said supply fan (14) or said extract fan (15), causing said standby fan (16) to operate in place of the failed fan, the method further comprising selectively moving blocking members (6) to partially block the supply air inlet (2) or the extract air outlet (4) in the event of failure such that air bypasses the failed fan and passes through the standby fan (16).

10. A ventilation unit according to any one of claims 1 to 8 wherein dampers are provided to define alternative fluid inlet and outlet flow paths through said unit upon activation, such that the fluid bypasses the failed fan and passes through the standby fan.

## Patentansprüche

1. Belüftungseinheit umfassend:
einen Zulufteinlass (2),
einen Abluftauslass (4);
einen Zufuhrventilator (14) zum Eintragen von Fluid über den Zulufteinlass (2) in die Einheit;
einen Abführventilator (15) zum Austragen von Fluid über den Abluftauslass (4) aus der Einheit;
einen Reserveventilator (16), der ausgelegt ist, um bei Empfang eines Steuersignals als Zufuhrventilator oder als Abführventilator zu arbeiten; und
Mittel zur Überwachung des Betriebs des Zufuhrventilators (14) und Abführventilators (15);
Steuermittel zum Erzeugen eines Steuersignals im Falle des Versagens entweder des Zufuhrventilators (14) oder des Abführventilators (15), wobei das Steuersignal dazu dient zu bewirken, dass der Reserveventilator (16) als der ausgefallene Ventilator arbeitet;
**dadurch gekennzeichnet, dass** die Belüftungseinheit ferner Sperrelemente (6) umfasst, die ausgelegt sind, um den Zulufteinlass (2) oder den Abluftauslass (4) im Versagensfall selektiv teilweise zu sperren, so dass Luft den ausgefallenen Ventilator umgeht und durch den Reserveventilator (16) strömt.

2. Belüftungseinheit nach Anspruch 1, wobei innerhalb der Belüftungseinheit ein Zuluftströmungspfad (7) und ein Abluftströmungspfad (8) definiert sind und der Zufuhrventilator im Zuluftströmungspfad (7) positioniert ist, der Abführventilator (15) im Abluftströmungspfad (8) positioniert ist und ein Reserveventilator (16) allgemein mittig zwischen dem Zuluftströmungspfad (7) und dem Abluftströmungspfad (8) positioniert ist.

3. Belüftungseinheit nach Anspruch 1 oder 2, wobei die Bewegung der Sperrelemente (6) durch das Steuermittel gesteuert wird.

4. Belüftungseinheit nach einem der vorhergehenden Ansprüche, wobei die Sperrelement (6) ein Zustromsperrglied (6b) und ein Abstromsperrglied (6a) umfassen und der Zulufteinlass (2) sich in einem geschlossenen Zustand befindet, wenn das Zustromsperrglied (6b) denjenigen Teil des Zulufteinlasses (2) blockiert, der Luft zum Zufuhrventilator (14) führt, und der Zuluftstrom den Zufuhrventilator (14) umgeht, und der Abluftauslass (4) sich in einem geschlossenen Zustand befindet, wenn das Abstromsperrglied (6a) den Abluftauslass (4) blockiert, der Luft aus dem Abführventilator (15) abführt, und der Abluftstrom den Abführventilator (15) umgeht.

5. Belüftungseinheit nach einem der vorhergehenden Ansprüche, wobei die Sperrglieder (6) drehbar angebracht sind, so dass ein Teil des Zulufteinlasses (2) und des Abluftauslasses (4) offen gelassen werden kann und ein Teil des Zulufteinlasses (2) und des Abluftauslasses (4) gesperrt werden kann.

6. Belüftungseinheit nach Anspruch 2, wobei die Strömungspfade von Zulufteinlass (7) und/oder Abluftauslass (8) im Normalbetrieb den Reserveventilator (16) umgehen.

7. Belüftungseinheit nach Anspruch 2 oder 5, wobei die Strömungspfade von Zulufteinlass (7) und/oder Abluftauslass (8) durch einen Wärmeaustauscher (17) verlaufen.

8. Belüftungssystem, das mindestens eine Belüftungseinheit nach einem vorhergehenden Anspruch umfasst.

9. Verfahren zum Betreiben eines Belüftungssystems, wobei ein Belüftungsventilator (14) vorgesehen ist, um Luft über einen Zulufteinlass (2) einer Belüftungseinheit zuzuführen, und ein Abführventilator (15) vorgesehen ist, um Luft über einen Abluftauslass (4) aus der Belüftungseinheit abzuführen, und ein Reserveventilator (16), der in der Lage ist, als Zufuhrventilator und Abführventilator zu arbeiten, wobei der Betrieb des Zufuhrventilators (14) und Abführventilators (15) überwacht wird und im Falle des Versagens entweder des Zufuhrventilators (14) oder des Abführventilators (15) ein Steuersignal erzeugt wird, das den Betrieb des Reserveventilators (16) an Stelle des ausgefallenen Ventilators bewirkt, wobei das Verfahren ferner umfasst: selektives Bewegen von Sperrgliedern (6), um im Versagensfall den Zulufteinlass (2) oder den Abluftauslass (4) teilweise zu sperren, so dass Luft den ausgefallenen Ventilator umgeht und durch den Reserveventilator (16) strömt.

10. Belüftungseinheit nach einem der Ansprüche 1 bis 8, wobei Klappen vorgesehen sind, um bei entsprechender Aktivierung alternative Zu- und Abströmpfade durch die Einheit zu definieren, so dass das Fluid den ausgefallenen Ventilator umgeht und durch den Reserveventilator strömt.

## Revendications

1. Unité de ventilation, comprenant :
une entrée d'air d'alimentation (2) ;
une sortie d'air d'extraction (4) ;
un ventilateur d'alimentation (14) pour pousser un fluide dans ladite unité par l'intermédiaire de ladite entrée d'air d'alimentation (2) ;
un ventilateur d'extraction (15) pour pousser un fluide hors de ladite unité par l'intermédiaire de ladite sortie d'air d'extraction (4) ;
un ventilateur de secours (16) configuré pour servir de ventilateur d'alimentation ou de ventilateur d'extraction lors de la réception d'un signal de commande ; et
des moyens pour surveiller le fonctionnement desdits ventilateurs d'alimentation (14) et d'extraction (15) ;
des moyens de commande pour générer un signal de commande en cas de défaillance de l'un ou de l'autre dudit ventilateur d'alimentation (14) ou dudit ventilateur d'extraction (15), ledit signal de commande étant destiné à faire en sorte que ledit ventilateur de secours (16) fonctionne à la place du ventilateur défaillant ;
**caractérisée en ce que** l'unité de ventilation comprend en outre des éléments de blocage (6) configurés pour sélectivement bloquer partiellement l'entrée d'air d'alimentation (2) ou la sortie d'air d'extraction (4) en cas de défaillance de telle sorte que de l'air contourne le ventilateur défaillant et passe à travers le ventilateur de secours (16).

2. Unité de ventilation selon la revendication 1, dans laquelle un chemin d'écoulement d'air d'alimentation (7) et un chemin d'écoulement d'air d'extraction (8) sont définis à l'intérieur de l'unité de ventilation, et le ventilateur d'alimentation est positionné dans le chemin d'écoulement d'air d'alimentation (7), le ventilateur d'extraction (15) est positionné dans le chemin d'écoulement d'air d'extraction (8) et un ventilateur de secours (16) est positionné de façon généralement centrale entre les chemins d'écoulement d'air d'alimentation (7) et d'air d'extraction (8).

3. Unité de ventilation selon la revendication 1 ou 2, dans laquelle le mouvement des éléments de blocage (6) est commandé par les moyens de commande.

4. Unité de ventilation selon une quelconque revendication précédente, dans laquelle les éléments de blocage (6) comprennent un élément de blocage d'alimentation (6b) et un élément de blocage d'extraction (6a), et l'entrée d'air d'alimentation (2) est dans un état fermé lorsque l'élément de blocage d'alimentation (6b) couvre la partie de l'entrée d'air d'alimentation (2) qui fait passer de l'air vers le ventilateur d'alimentation (14) et l'écoulement d'air d'alimentation contourne le ventilateur d'alimentation (14), et la sortie d'air d'extraction (4) est dans un état fermé lorsque l'élément de blocage d'extraction (6a) couvre la sortie d'air d'extraction (4) qui expulse de l'air du ventilateur d'extraction (15) et l'écoulement d'air d'extraction contourne le ventilateur d'extraction (15).

5. Unité de ventilation selon une quelconque revendication précédente, dans laquelle les éléments de blocage (6) sont montés de façon rotative de telle sorte qu'une partie de l'entrée d'air d'alimentation (2) et de la sortie d'air d'extraction (4) puisse être laissée ouverte et qu'une partie de l'entrée d'air d'alimentation (2) et de la sortie d'air d'extraction (4) puisse être bloquée.

6. Unité de ventilation selon la revendication 2, dans laquelle les chemins d'écoulement d'entrée d'air d'alimentation (7) et/ou de sortie d'air d'extraction (8) contournent le ventilateur de secours (16) durant le fonctionnement normal.

7. Unité de ventilation selon la revendication 2 ou 5, dans laquelle lesdits chemins d'écoulement d'entrée d'air d'alimentation (7) et de sortie d'air d'extraction (8) passent à travers un échangeur de chaleur (17).

8. Système de ventilation comprenant au moins une unité de ventilation selon une quelconque revendication précédente.

9. Procédé de fonctionnement d'un système de ventilation, dans lequel un ventilateur d'alimentation de ventilation (14) est prévu pour pousser de l'air dans une unité de ventilation par l'intermédiaire d'une entrée d'air d'alimentation (2) et un ventilateur d'extraction (15) est prévu pour pousser de l'air hors de l'unité de ventilation par l'intermédiaire d'une sortie d'air d'extraction (4), et un ventilateur de secours (16) qui est capable de fonctionner en tant que ventilateur d'alimentation et que ventilateur d'extraction, le fonctionnement des ventilateurs d'alimentation (14) et d'extraction (15) étant surveillé, et un signal de commande étant généré en cas de défaillance de l'un ou de l'autre dudit ventilateur d'alimentation (14) ou dudit ventilateur d'extraction (15), faisant en sorte que ledit ventilateur de secours (16) fonctionne à la place du ventilateur défaillant, le procédé comprenant en outre le mouvement sélectif d'éléments de blocage (6) pour bloquer partiellement l'entrée d'air d'alimentation (2) ou la sortie d'air d'extraction (4) en cas de défaillance de telle sorte que l'air contourne le ventilateur défaillant et passe à travers le ventilateur de secours (16).

10. Unité de ventilation selon l'une quelconque des revendications 1 à 8, dans laquelle des amortisseurs sont prévus pour définir d'autres chemins d'écoulement d'entrée et de sortie de fluide à travers ladite unité lors de l'activation, de telle sorte que le fluide contourne le ventilateur défaillant et passe à travers le ventilateur de secours.
